(19)

Europäisches
Patentamt

European
Patent Office

Office européen
des brevets

(11)　**EP 3 588 304 B1**

(12)　　　　　　　**EUROPEAN PATENT SPECIFICATION**

(45) Date of publication and mention
of the grant of the patent:
**03.03.2021   Bulletin 2021/09**

(51) Int Cl.:
*G06F 11/36* (2006.01)

(21) Application number: **19181736.0**

(22) Date of filing: **21.06.2019**

(54) **SYSTEM AND METHOD FOR EQUIVALENCE CLASS ANALYSIS-BASED AUTOMATED REQUIREMENTS-BASED TEST CASE GENERATION**

SYSTEM UND VERFAHREN ZUR ÄQUIVALENZKLASSENANALYSE BASIEREND AUF AUTOMATISIERTER ANFORDERUNGSBASIERTER TESTDATENSATZERZEUGUNG

SYSTÈME ET PROCÉDÉ DE GÉNÉRATION AUTOMATIQUE DE CAS D'ESSAI BASÉE SUR UNE ANALYSE DE CLASSE D'ÉQUIVALENCE ET DES EXIGENCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2018   US 201816014694**

(43) Date of publication of application:
**01.01.2020   Bulletin 2020/01**

(73) Proprietor: **General Electric Company**
**Schenectady, NY 12345 (US)**

(72) Inventors:
 • **MANOLIOS, Panagiotis**
  **Niskayuna, NY 12309 (US)**
 • **LI, Meng**
  **Niskayuna, NY 12309 (US)**
 • **ROMANI DE OLIVEIRA, Italo**
  **Niskayuna, NY 12309 (US)**
 • **DE CONTO, Augusto**
  **Niskayuna, NY 12309 (US)**

 • **YU, Han**
  **Niskayuna, NY 12309 (US)**
 • **RUSSELL, Daniel**
  **Niskayuna, NY 12309 (US)**
 • **ROY, Sundeep**
  **Niskayuna, NY 12309 (US)**

(74) Representative: **Openshaw & Co.**
 **8 Castle Street**
 **Farnham, Surrey GU9 7HR (GB)**

(56) References cited:
 **EP-A1- 3 206 129     US-A1- 2015 089 296**

 • **JOKHIO M S ET AL: "Towards Specification Based Testing for Semantic Web Services", SOFTWARE ENGINEERING CONFERENCE, 2009. ASWEC '09. AUSTRALIAN, IEEE, PISCATAWAY, NJ, USA, 14 April 2009 (2009-04-14), pages 54-63, XP031476307, ISBN: 978-0-7695-3599-9**

**Description**

BACKGROUND

Safety-critical software needs to be strictly tested according to applicable software certification standards (e.g. DO-178C for aviation software). Representative values (e.g. values in equivalence classes) and error-prone values (boundary values and abnormal ranges) are required to be tested at the requirements-level. Conventionally, these test cases are manually generated and are time-consuming.

Conventional approaches to automated test generation can capture (i.e., model) the software design requirements as a statechart. Then a state machine can implement a forward/backward propagation process to determine test vectors from the state chart. A test generator determines if a transition is reached by walking through the statechart model of the software design.

The Unified Modeling Language (UML) specification includes a standard for specifying statecharts. Other methods and descriptions of statecharts and similar finite automata have been used to describe software design and/or requirements as well, including Harel statecharts, state diagrams, and finite state machines, among others. Available off the shelf tools and techniques for generating tests using these statecharts achieve structural code coverage only. Further, the off the shelf tools may take an excessive amount of time to generate tests from a statechart.

Document EP-A1-3 206 129 discloses a method for automatically generating requirements based test cases using equivalence class analysis comprising: a textual converter unit converting textual design requirements to sets of machine-readable version of design requirements, a requirement partition unit partitioning the machine-readable design requirements into one or more sets of related design requirements; an equivalence class partition unit processing the sets of machine-readable design requirements and input/output variables into a set of equivalence classes; and an equivalence class analyzer unit analyzing the set of equivalence classes.

BRIEF DESCRIPTION OF THE DRAWINGS

FIG. 1 depicts a system for equivalence class analysis based test case generation in accordance with embodiments;
FIG. 2 depicts a process for equivalence class analysis based test case generation in accordance with embodiments;
FIG. 3 depicts a set-based approach to implement the equivalence class analysis of FIG. 2 in accordance with embodiments; and
FIG. 4 depicts a process for formal-methods based equivalence class analysis in accordance with embodiments.

DESCRIPTION

The invention is defined in claim 1 which defines a method for automatically generating requirements based test cases using equivalence class analysis. Further advantageous enhancements of the invention are defined in the dependent claims 2 to 8.

In accordance with embodiments, methods automatically generate requirements-based test cases using equivalence class analysis so that representative values (e.g., values in equivalence classes) and error-prone values (e.g., boundaries values, abnormal ranges, etc.) can be tested at the requirements-level using the generated test cases.

Valid and invalid equivalence classes are differentiated according to whether they are within normal range or abnormal range. Equivalence class tests are selected from the valid equivalence classes. Boundary values are identified at the boundaries of adjacent equivalence classes, so that the behavior transition of the software can be tested. Boundary value tests are selected from the boundaries of the valid equivalence classes, and robustness tests are selected from the boundaries of the invalid equivalence classes and/or the extreme values of the input physical range.

Equivalence classes induced by the requirements are defined to be sets of input vectors that activate the same subset of requirements. By testing one value in the equivalence class, it is equivalent to test all other values that activate this subset of requirements, which represent a specified behavior of the software.

Embodying systems and methods can automatically generate equivalence class tests, boundary value tests, and robustness tests from a set of requirements based on equivalence class analysis technology. Embodying methods can include two approaches (i.e., set-based approach, and formal methods based approach) to automatically perform equivalence class analysis.

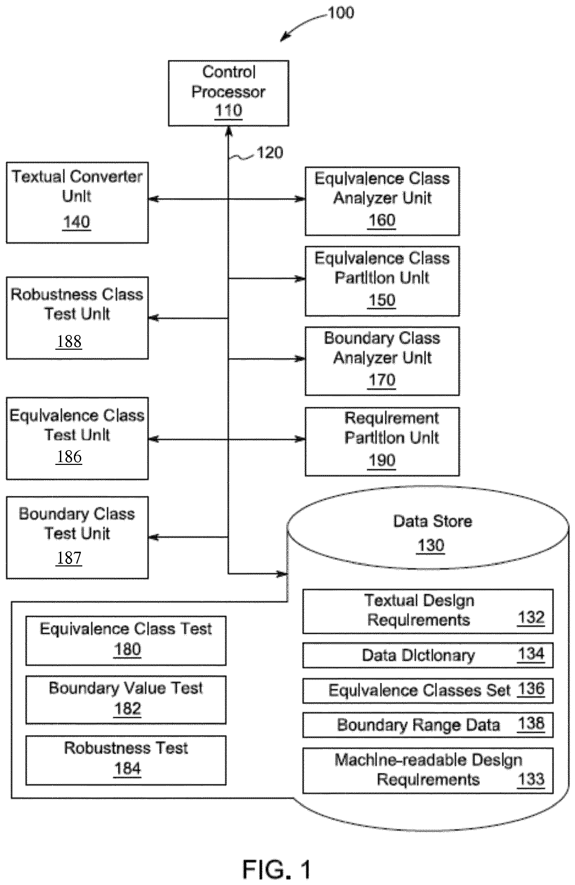

Figure 1 depicts equivalence class analysis based test case generation system 100 in accordance with embodiments. System 100 can be an automated test case generation (ATCG) system that can automatically generate test cases from a set of requirements based on equivalence class analysis. System 100 includes control processor 110 which executes computer executable instructions to control the operation of the system and its components. Control processor 110 can be located in a computer, or a server, and interconnected to the various components via communication link 120. The communication link can be an internal bus, an electronic communication network, or the like.

System 100 includes data store 130 that can contain textual design requirements 132 (e.g., system level and/or high level requirements) of the safety-critical software. These textual system design requirements can be converted into a machine-readable language by textual converter unit 140. The machine-readable language of the requirements is accessible by system 100 for automated analysis as disclosed herein. Data dictionary 134 contains input and output variable information regarding input and output variables. The machine-readable requirements and the contents of the data dictionary can be processed by equivalence class partition unit 150. A set of equivalence classes 136 induced by the requirements, when analyzed in view of the input and output variables, is produced by the equivalence class partition unit. Equivalence class test(s) 180, boundary value test(s) 182, and robustness test(s) 184, as disclosed below, can also be stored in data store 130.

Equivalence class analyzer unit 160 is structured to analyze equivalence classes set 136 to identify which classes are, and are not, covered by any requirements. Those classes not covered can be identified as uncovered input ranges, which need to be reported for requirements completeness check. For each of the covered equivalence classes, if it is within the normal range, a value is selected from the equivalence class as the equivalence class test 180; if it is in the abnormal range, no test is selected.

Each input/output variable has a normal range and a physical range. Its normal range is the set of values that the variable can choose when the design is running normally. Its physical range is the set of values that the variable can choose from both its normal range and abnormal range. Boundary class analyzer unit 170 is structured to analyze the set of equivalence classes to identify the boundaries of the equivalence classes. Boundary range data 138 can be stored in data store 130. For each of the identified boundaries, values are selected on the boundary and on either side of the boundary. If the selected value is within a normal range it is identified as boundary value test 182; if the selected value is within an abnormal range, it is identified as robustness test 184.

Embodying systems and methods can perform equivalence class analysis (including equivalence class partition and boundary value analysis). Machine-readable design requirements 133 are first partitioned by requirement partition unit 190. This partition unit is configured to find one or more minimum sets of related design requirements (e.g., those requirements impacting the same set of outputs) to reduce testing complexity.

An equivalence class analysis process can be performed on the minimum sets. A set-based approach uses polytopes to represent the requirement conditions (i.e., a condition to activate the requirement). A set-based approach analyzes the requirements to identify set intersection and/or union to find the equivalence classes, which activate subsets of the requirements. The set-based approach enables the user to select value at different places in the equivalence classes or boundaries. A formal methods based approach uses predicates to represent the requirement conditions and apply formal methods to find the test cases. The formal methods based approach is better at dealing with input variables that interact with each other in the requirement conditions. A user can choose from among these approaches (set- or formal- based) depending on the type of the requirements or the standard of the test cases. The expected output is automatically obtained by attaching the test input value as test objective in a requirement model and applying model checking technology to find an output value so that the requirements are satisfied.

The formal definition of the equivalence classes can be described as follows:

Definition 1: Given a set of requirements R and input operating space (normal range) $G_{op}$ ($u_1$, $u_2$, ..., $u_n$), the valid equivalence class partition $P^R$ induced by R is represented by Equation 1; and invalid equivalence class $P^{inv}$ is represented by Equation 2:

$$P^R := \cup_{R' \subseteq R} \{G_{op} \wedge_{r \in R'} G_r \wedge_{r \in R-R'} \neg G_r\} \quad \text{EQ. 1}$$

$$P^{inv} := \cup_{R' \subseteq R} \{\neg G_{op} \wedge G_{phy} \wedge_{r \in R'} G_r \wedge_{r \in R-R'} \neg G_r\} \quad \text{EQ. 2}$$

where $G_r$($u_1$, $u_2$, ..., $u_n$) is requirement condition for requirement r ∈ R; and
$G_{phy}$ is input space (physical range).

As described by Definition 1, valid and invalid equivalence classes are differentiated according to whether they are within the normal range or the abnormal range. Equivalence class tests are selected from the valid equivalence classes. Boundaries values are identified from the boundaries of adjacent equivalence classes, so that the behavior transition of the software can be tested. Boundary value tests are selected from the boundaries of the valid equivalence classes, and robustness tests are selected from the boundaries of the invalid equivalence classes and the extreme values of the input physical range.

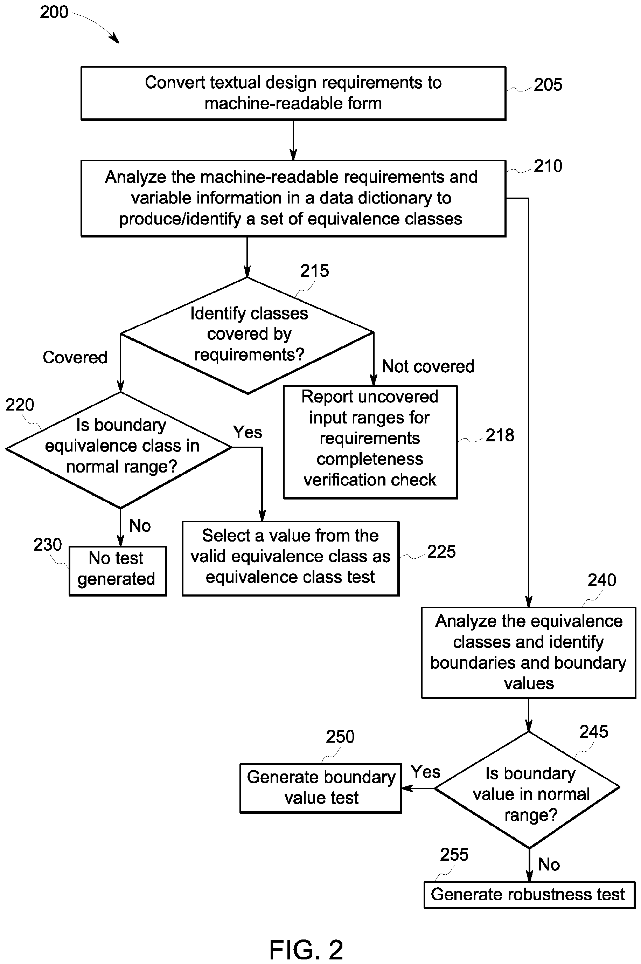

Figure 2 depicts equivalence class analysis based test case generation process 200 in accordance with embodiments. Textual design requirements 132 are converted, step 205, to a machine-readable language by textual converter unit 140. Variable information in data dictionary 134 and the machine-readable requirements are analyzed, step 210, by equivalence class partition unit 150. This analysis produces, and/or identifies, a set of equivalence classes 132 induced by the requirements. Equivalence classes covered by any requirements are identified, step 215. Input ranges not covered by any of the requirements are reported, step 218, for a requirements completeness verification check.

An evaluation is performed, step 220, to determine whether the covered equivalence class is within the normal range or within the abnormal range. For each of the covered equivalence classes within the normal range a value is selected, step 225, from the equivalence class as equivalence class test 180. If a covered equivalence class is in the abnormal range, process 200 flows from step 220 to step 230, where no test is generated.

The equivalence classes identified in step 210 are analyzed, step 240, by boundary class analyzer unit 170, where the boundaries between equivalence classes are identified and values are selected from the boundaries based on the test criteria. Whether the boundary value is in the normal range is determined, step 245, for each identified boundary value. If the boundary value is within the normal range, boundary value test 182 is generated, step 250. If the boundary value is within the abnormal range, robustness test 184 is generated, step 255.

Embodying systems and methods can implement at least two approaches to perform the equivalence class analysis (including equivalence class partition and boundary value analysis). The set of requirements can first be partitioned by identifying sets of requirements that are connected in a chain of dependencies determined by shared output variables (e.g., if requirement R1 has outputs A and B, requirement R2 has outputs B and C, and requirement R3 has outputs C and D, R1, R2, and R3 are connected). If so, they can all be part of the same connected component. This approach can reduce complexity.

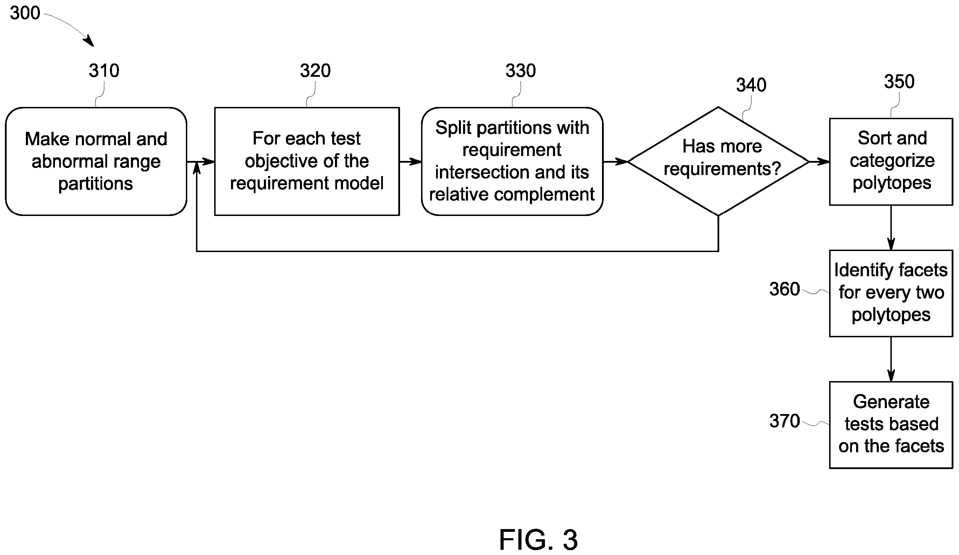

Figure 3 depicts process 300 for a set-based approach to implement the equivalent class analysis depicted in FIG. 2 in accordance with embodiments. In the set-based approach each requirement condition is represented as a union of convex polytopes (to represent non-convex polytopes) that covers all input variables, where each input variable is one dimension of the polytopes. The same representation is used for normal and abnormal input ranges. A partition process is used over input space to obtain the polytopes. Initially, the input space is partitioned into normal range polytopes and abnormal range polytopes, step 310. A loop, steps 320-340, is performed for each requirement. Each requirement along with its requirement condition splits, step 330, the current polytopes into sub-polytopes: the sub-polytope covered by that requirement condition (i.e., the intersection of current polytope and the requirement condition polytope); and the sub-polytope not covered by the requirement condition (i.e., the relative complement of requirement in current polytope). If there are more requirements, step 340, the loop repeats (steps 320-340). After the partition process, each polytope is sorted into a corresponding equivalence class, step 350.

If the polytope comes from a normal range, it is a valid equivalence class, and an equivalence class test is selected by picking one value from the polytope according to the criteria (e.g., the center value of the polytope). If the polytope comes from the abnormal range, it is an invalid equivalence class and no test is generated at this point. If the polytope is not covered by any requirement condition polytope, it is reported for requirements completeness verification.

After the polytopes (i.e., equivalence classes) are generated, shared facets are identified for every two polytopes, step 360. These facets are the boundaries between equivalence classes. Tests are generated, step 370, by selecting values from the facets based on the test criteria. If the test belongs to a normal range polytope, it is a boundary value test; if the test belongs to an abnormal range polytope, it is a robustness test. If the test belongs to a polytope not covered by any requirement conditions, it is not a valid test and will not be stored. The test selection criteria vary according to the test standards and variable data type (e.g., precision, tolerance, etc.).

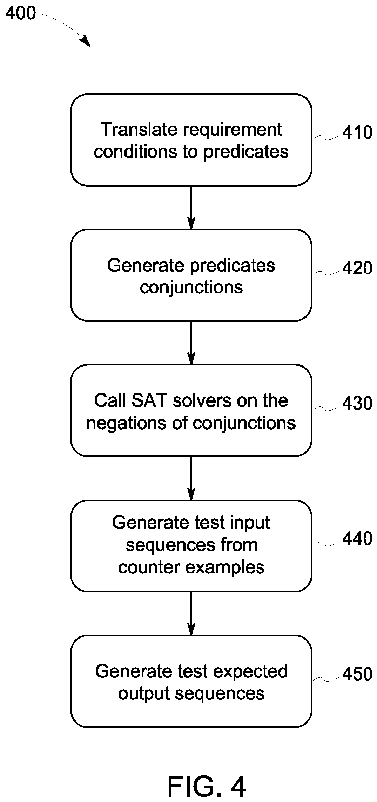

Figure 4 depicts process 400 for a formal-methods based approach to implement the equivalence class analysis depicted in FIG. 2 in accordance with embodiments. Beginning with identified requirement connected components (which are identified by requirements partition unit 190), process 400 translates, step 410, the requirement conditions to predicates that can be read by a formal method tool (e.g., a satisfiability (SAT) solver). For each subset of requirements, the conjunction of predicates is generated, step 420, to represent the activation condition of the subset of requirements. The predicates conjunction is the equivalence class that activates the subset of requirements. To generate shared boundary between every two equivalence classes, the two equivalence classes are first augmented to include their boundaries (e.g., ">" is changed to ">=", and "<" is changed to "<=") and the conjunction of predicates of the augmented equivalence classes are generated to be the shared boundary, step 420. To detect uncovered input space, the conjunction of the negations of all requirements predicates is generated, step 420.

Then, process 400 calls the formal methods tool (e.g., SAT solver), step 430, on the negations of the generated predicates conjunctions (equivalence classes, shared boundaries, and uncovered input space). If the negation is not always satisfied for all possible inputs in the input space, the SAT solver can produce a counterexample to the negation which is a value that satisfies the predicates conjunction. The counterexample is a test case (equivalence class test, boundary value test, or robustness test) if the predicates conjunction is equivalence class or shared boundary. The counterexample indicates the existence of the uncovered input space if the predicates conjunction is uncovered input space. At step 440, the equivalence class test, boundary value test, or robustness test input sequence can be generated and/or extracted from the counterexample. This generation and/or extraction can be respectively performed by equivalence class test unit 186, boundary class test unit 187, and robustness class test unit 188.

If the SAT solver determines the negations are always satisfied at step 430, the predicate conjunction is not satisfiable (i.e., the equivalence class or shared boundary does not exist) and no test case is needed. If the SAT solver returns "unknown" result, the satisfiability problem cannot be solved by the SAT solver and manual analysis can be performed. After generating the test input sequence(s), the test expected output sequences for the test cases can be generated by setting the requirement input as the input sequences identified at step 440 and call the SAT solver on the requirement to generate, step 450, an output sequence that satisfies the requirement.

Embodying system and methods automate the equivalence class test, boundary value test, and robustness test generation process. Also uncovered input space can be automatically detected. These uncovered input spaces can indicate potential gaps and other errors in the requirements. The automation of equivalence class analysis and test case generation process can reduce test time and improve the overall test quality.

Embodying equivalence class analysis can be applied to requirements having a time domain component (e.g., a time-dependent attribute and/or condition). Table I is illustrative of four basic timing logic statements that can appear in a requirement. These timing statements can be transformed into at least two normalized forms scenarios: (Scenario 1) "condition has been true for the past $t$ units of time;" and (Scenario 2) "condition was true in the past $t$ units of time."

Table I. Timing Statements and Corresponding Normalized (Norm) Form

|  | Timing Statement | Norm Form |
|---|---|---|
| 1 | Condition has not been true for the past $t$ units of time | ^Condition has been true for the past $t$ units of time |
| 2 | Condition was not true in the past $t$ units of time | ^Condition was true in the past $t$ units of time |
| 3 | ^(Condition has been true for the past $t$ units of time) | ^Condition was true in the past $t$ units of time |
| 4 | ^(Condition was true in the past $t$ units of time) | ^Condition has been true for the past $t$ units of time |

Embodying equivalence class analysis that includes time domain components can generate test cases that test at least two types of triggers . Table II illustrates leading trigger and lagging trigger tests for timing requirements when the monitored conditions are not transitory (i.e., stay at steady state). Each type of trigger should be tested to ensure that the timing constraint is correctly implemented. A 'leading trigger' is a trigger which makes an (about) immediate change to the controlled variable. A 'lagging trigger' is a trigger which must be maintained for a full time interval of $t$ units of time to have an impact on the monitored condition.

For purposes of explanation, timing requirement of row 1 can be read as 'when X happens within past $t$ units of time, then do Y'. When applying embodying equivalence class analysis with time domain factors, a timing requirement can be tested for satisfying a leading trigger by confirming if the following condition is met: if X occurs at $t_0$, then Y occurs at (about) the same time. Similarly, the timing requirement can be tested for satisfying a lagging trigger by confirming if the following condition is met: prior to $t_0$ the condition 'not X' is met; then at $t_0$ the condition becomes X. If lead and lag boundaries of a timing requirement are met, there is a high degree of confidence that an event occurrence at an intervening time will be met by the timing requirement. Under embodying equivalence class analysis with time domain factors, there is no need to test within these boundaries.

For timing requirements with a 'was' timing expression, the leading trigger is the satisfaction of the monitored condition; and the lagging trigger is the falsification of the monitored condition. For timing requirements with a 'has been' timing expression, the leading trigger is the falsification of the monitored condition; and the lagging trigger is the satisfaction of the monitored condition.

Table II. Timing Requirements Testing Strategy

| | Timing Requirement | Leading Trigger | Lagging Trigger |
|---|---|---|---|
| 1 | Do <Y><br><br>When was <X> in the past <t> units of time | | |
| 2 | Do <Y><br><br>When was not <X> in the past <t> units of time | | |
| 3 | Do <Y><br><br>When has been <X> for the past <t> units of time | | |
| 4 | Do <Y><br><br>When has been not <X> for the past <t> units of time | | |

Table III illustrates leading trigger and lagging trigger for timing requirements with event type of monitored conditions that are transitory in nature (i.e., do not transition to steady state). A 'was' condition is a valid construct for transitory timing requirement. Because transitory events are evanescent and cannot be true for an extended period of time, a 'has been' condition is not a valid construct. Table III provides timing statements with test conditions for this type of event trigger. Comparing to the non-transitory triggers in Table II, the tests needed are the same except the monitored conditions are transitory.

Table III. Testing Timing Requirements for Transitory Event Triggering

| Timing Requirement | Leading Trigger | Lagging Trigger |
|---|---|---|
| Do \<y\> <br><br> When \<X\> was received in the past \<t\> units of time | Y, not(Y), X, not(X); $T_{-t}$, $T_0$ | Y, not(Y), X, not(X); $T_0$, $T_t$ |
| Do \<y\> <br><br> When \<X\> was not received in the past \<t\> units of time | Y, not(Y), X, not(X); $T_{-t}$, $T_0$ | Y, not(Y), X, not(X); $T_0$, $T_t$ |

The expected test cases and procedures based on the concept of leading and lagging triggers in Table II and III are written with regard to timing requirements of timing statements that fall into categories of Scenario 1 and Scenario 2 (as above), with the differentiation for event type and non-event type monitored conditions. The following paragraphs describe the test cases and procedures for the two types of timing statements.

Scenario 1:

Do \<Y\>

When \<X\> was true in the past \<t\> units of time

1. \<X\> is non-event condition:

| Test Case Readable | Test Procedure Initially | Test Procedure Action | Test Procedure Final |
|---|---|---|---|
| Verify \<Y\> <br> When \<X\> | ^X, ^Y | ^X → X | X, Y, Z |
| Verify \<Y\> for $t$ units of time <br> When \<^X\> | X, ^Y | X → ^X | ^X, Y for $t$ units of time |

2. \<X\> is event received condition:

| Test Case Readable | Test Procedure Initially | Test Procedure Action | Test Procedure Final |
|---|---|---|---|
| Verify \<Y\> <br> When \<X\> | ^Y | X | Y |
| Verify \<Y\> for $t$ units of time <br> When \<X\> | ^Y | X | Y for $t$ units of time |

3. \<X\> is event not received condition ('was not' event condition gets translated into 'has been' condition)". (No test cases and procedures available since this type of timing construct is not valid):

| Test Case Readable | Test Procedure Initially | Test Procedure Action | Test Procedure Final |
|---|---|---|---|
| N/A | N/A | N/A | N/A |

Scenario 2:

Do <Y>

When <X> has been true for the past <t> "units"

1. <X> is non-event condition:

| Test Case Readable | Test Procedure Initially | Test Procedure Action | Test Procedure Final |
|---|---|---|---|
| Verify <Y> <br> When <X> for $t$ units of time | ^X, ^Y | ^X → X, then monitor for $t$ units of time | X, Y |

2. <X> is event received condition (no test cases and procedures available since this type of timing construct is not valid.):

| Test Case Readable | Test Procedure Initially | Test Procedure Action | Test Procedure Final |
|---|---|---|---|
| N/A | N/A | N/A | N/A |

3. <X> is event not received condition:

| Test Case Readable | Test Procedure Initially | Test Procedure Action | Test Procedure Final |
|---|---|---|---|
| Verify <Y> <br> When <X> for $t$ units of time | ^Y | X (= event received), then wait for $t$ units of time | Y |

In accordance with embodiments, test cases generated from equivalence class analysis (including equivalence class analysis on timing requirements having time domain attribute and/or condition) are optimized. Optimization reduces both computer processor occupation time and overhead, and memory requirements for executing the tests. The optimized test cases can be combined to arrive at a minimal set of optimal test cases. The optimization and combination can be performed using a satisfiability modulo theory (SMT) solver. Heuristics-based optimization can also be applied in certain scenarios to optimize the test cases. For example, heuristics-based optimization can guide the SMT solver to generate a single test which satisfies the constraints indicated in several test cases. This implies that several test cases can be combined and tested together - where a single set of test vectors can cover those test cases. For example, boundary value tests can be combined with equivalence classes tests if a test other than the boundary value tests is not required, since boundary value tests are within the equivalence classes.

In accordance with embodiments, the optimized test cases can be simplified so redundant clauses in the test cases are removed or combined. Test case simplification makes test cases more readable as some of the test cases may have more than one hundred clauses after optimization (which likely includes redundancies).

Simplification can be done by using the SMT solver to find the minimal form of a test case that satisfy the same constraints. For example, Sample Test Case 1 (below) includes the redundant clause of "input _1 > 1" since input_1 > 8 is stricter than "input_1 > 1". The simplification removes "input_1 > 1" in the simplified test case so the test case looks more concise and easier for reviewers to look at.

```
Sample Test Case 1:
Original:
    verify output = 1
          When input_1 > 1 and input_1 > 8
Simplified:
    verify output = 1
          When input_1 > 8
```

In accordance with some embodiments, computer executable instructions stored in non-volatile memory or computer-readable medium (e.g., register memory, processor cache, RAM, ROM, hard drive, flash memory, CD ROM, magnetic media, etc.) may include code or executable instructions that when executed may instruct and/or cause a controller or processor to perform methods disclosed above, such as automatic generation of requirements-based test cases using set-based and/or formal methods-based equivalence class analysis that includes testing of requirements with a time domain attribute and/or condition, as described above.

The computer-readable medium may be a non-transitory computer-readable media including all forms and types of memory and all computer-readable media except for a transitory, propagating signal. In one implementation, the non-volatile memory or computer-readable medium may be external memory.

Although specific hardware and methods have been described herein, note that any number of other configurations may be provided in accordance with embodiments of the invention. Thus, while there have been shown, described, and pointed out fundamental novel features of the invention, it will be understood that various omissions, substitutions, and changes in the form and details of the illustrated embodiments, and in their operation, may be made by those skilled in the art without departing from the scope of the invention. Substitutions of elements from one embodiment to another are also fully intended and contemplated. The invention is defined solely with regard to the claims appended hereto, and equivalents of the recitations therein.

**Claims**

1. A method for automatically generating requirements based test cases using equivalence class analysis, the method comprising:

   converting, by a textual converter unit (140), textual design requirements (132) to sets of machine-readable version of design requirements (133), one or more textual design requirements including a time domain component;
   partitioning, by a requirement partition unit (190), the machine-readable design requirements into one or more sets of related design requirements, wherein related design requirements are those requirements that impact a same set of output variables;
   processing, by an equivalence class partition unit (150), the sets of related design requirements and input/output variables into a set of equivalence classes (136);
   analyzing, by an equivalence class analyzer unit (160), the set of equivalence classes:

   identifying, by a boundary class analyzer unit (170), boundaries of the equivalence classes, the boundaries including at least one of a behavior transition between adjacent equivalence classes and a time domain boundary within an equivalence class;
   applying equivalence class analysis to the time domain boundary to obtain a set of time domain test cases;
   optimizing and subsequently combining, using a satisfiability modulo theory solver, the time domain test cases to obtain a second set of test cases, the second set of test cases having a quantity less than the set of test cases before the optimizing and combining; and
   removing redundant clauses from the second set of test cases.

2. The method of claim 1, including:

   partitioning input space to obtain convex polytopes including normal range polytopes and abnormal range polytopes;
   splitting the convex polytopes using each design requirement and an associated requirement condition into a sub-polytope not covered by the associated requirement condition, and a sub-polytope covered by the associated requirement condition;
   sorting each polytope into a corresponding equivalence class;
   for polytopes in the normal range selecting an equivalence class test (180) by picking a value from the polytope according to a test criteria, else not generate an equivalence class test, the test criteria including a time domain condition;
   identifying shared facets between every two polytopes, where the shared facet represents a boundary between equivalence classes; and
   generating tests by selecting values from the shared facets based on the test criteria, the generated test is a boundary value test if a normal range polytope or a robustness test if an abnormal range polytope.

3. The method of claim 1 or 2, the analyzing the set of equivalence classes including partitioning the machine-readable design requirements by identifying sets of design requirements connected in a chain of dependencies.

4. The method of any of claims 1 to 3, including partitioning input space to obtain convex polytopes including normal range polytopes and abnormal range polytopes.

5. The method of claim 4, including:

   splitting the convex polytopes using each design requirement and an associated requirement condition into a sub-polytope not covered by the associated requirement condition, and a sub-polytope covered by the associated requirement condition; and
   sorting each polytope into a corresponding equivalence class.

6. The method of claim 5 including:

   for polytopes in the normal range selecting an equivalence class test by picking a value from the polytope according to a test criteria, else not generate an equivalence class test, the test criteria including a time domain condition;
   identifying shared facets between every two polytopes, where the shared facet represents a boundary between equivalence classes; and
   generating tests by selecting values from the shared facets based on the test criteria, the generated test is a boundary value test if a normal range polytope or a robustness test if an abnormal range polytope.

7. The method of any of claims 1 to 6, the analyzing the set of equivalence classes including applying a formal methods-based approach including representing each requirement as predicates.

8. The method of any of claims 1 to 7, including:

   translating machine-readable requirements to predicates;
   generating predicates conjunctions for equivalence classes, shared boundaries and uncovered input space;
   calling a formal methods tools on the negations of the predicates conjunctions and obtain counterexamples;
   generating test input sequences from counterexamples; and
   generating expected outputs by attaching generated test inputs sequences as test objectives to requirements models.

**Patentansprüche**

1. Verfahren zum automatischen Erzeugen von anforderungsbasierten Testdatensätzen unter Verwendung einer Äquivalenzklassenanalyse, wobei das Verfahren Folgendes umfasst:

   Konvertieren von Textaufbauanforderungen (132) durch eine Textkonvertereinheit (140) in Sätze von maschinenlesbaren Versionen von Aufbauanforderungen (133), wobei eine oder mehrere Textaufbauanforderungen eine Zeitbereichskomponente einschließen;
   Partitionieren der maschinenlesbaren Aufbauanforderungen durch eine Anforderungspartitionseinheit (190) in einen oder mehrere Sätze von verwandten Aufbauanforderungen, wobei verwandte Aufbauanforderungen diejenigen Anforderungen sind, die einen gleichen Satz von Ausgabevariablen beeinflussen;
   Verarbeiten der Sätze von verwandten Aufbauanforderungen und Eingabe-/Ausgabevariablen zu einem Satz von Äquivalenzklassen (136) durch eine Äquivalenzklassenpartitionseinheit (150);
   Analysieren des Satzes von Äquivalenzklassen durch eine Äquivalenzklassenanalyseeinheit (160):

      Identifizieren von Grenzen der Äquivalenzklassen durch eine Grenzklassenanalyseeinheit (170), wobei die Grenzen einen Verhaltensübergang zwischen angrenzenden Äquivalenzklassen und/oder eine Zeitbereichsgrenze innerhalb einer Äquivalenzklasse einschließen;
      Anwenden der Äquivalenzklassenanalyse auf die Zeitbereichsgrenze, um einen Satz von Zeitbereichstestdatensätzen zu erhalten;
      Optimieren und anschließendes Kombinieren der Zeitbereichstestdatensätze unter Verwendung eines Erfüllbarkeitsmodulotheorien-Solvers, um einen zweiten Satz von Testdatensätzen zu erhalten, wobei der zweite Satz von Testdatensätzen eine Menge aufweist, die geringer als der Satz von Testdatensätzen vor dem Optimieren und Kombinieren ist; und
Entfernen redundanter Klauseln aus dem zweiten Satz von Testdatensätzen.

2.  Verfahren nach Anspruch 1, das Folgendes einschließt:

    Partitionieren des Eingaberaums, um konvexe Polytope einschließlich Polytope in einem normalen Bereich und Polytope in einem anormalen Bereich zu erhalten;
    Aufteilen der konvexen Polytope unter Verwendung jeder Aufbauanforderung und einer zugehörigen Anforderungsbedingung in ein Unterpolytop, das nicht durch die zugehörige Anforderungsbedingung abgedeckt ist, und ein Unterpolytop, das durch die zugehörige Anforderungsbedingung abgedeckt ist;
    Sortieren jedes Polytops in eine entsprechende Äquivalenzklasse;
    Auswählen eines Äquivalenzklassentests (180) für Polytope in dem normalen Bereich durch Aussuchen eines Wertes von dem Polytop gemäß Testkriterien, andernfalls wird ein Äquivalenzklassentest nicht erzeugt, wobei die Testkriterien eine Zeitbereichsbedingung einschließen;
    Identifizieren gemeinsamer Facetten zwischen je zwei Polytopen, wobei die gemeinsame Facette eine Grenze zwischen Äquivalenzklassen darstellt; und
    Erzeugen von Tests durch Auswählen von Werten aus den gemeinsamen Facetten basierend auf den Testkriterien, wobei der erzeugte Test ein Grenzwerttest ist, wenn es sich um ein Polytop in dem normalen Bereich handelt, oder ein Robustheitstest ist, wenn es sich um ein Polytop in dem anormalen Bereich handelt.

3.  Verfahren nach Anspruch 1 oder 2, wobei das Analysieren des Satzes von Äquivalenzklassen das Partitionieren der maschinenlesbaren Aufbauanforderungen durch Identifizieren von Sätzen von Aufbauanforderungen, die in einer Kette von Abhängigkeiten verbunden sind, einschließt.

4.  Verfahren nach einem der Ansprüche 1 bis 3, einschließlich Partitionieren des Eingaberaums, um konvexe Polytope einschließlich Polytope in dem normalen Bereich und Polytope in dem anormalen Bereich zu erhalten.

5.  Verfahren nach Anspruch 4, das Folgendes einschließt:

    Aufteilen der konvexen Polytope unter Verwendung jeder Aufbauanforderung und einer zugehörigen Anforderungsbedingung in ein Unterpolytop, das nicht durch die zugehörige Anforderungsbedingung abgedeckt ist, und ein Unterpolytop, das durch die zugehörige Anforderungsbedingung abgedeckt ist; und
    Sortieren jedes Polytops in eine entsprechende Äquivalenzklasse.

6.  Verfahren nach Anspruch 5, das Folgendes einschließt:

    Auswählen eines Äquivalenzklassentests für Polytope in dem normalen Bereich durch Aussuchen eines Wertes von dem Polytop gemäß Testkriterien, andernfalls wird ein Äquivalenzklassentest nicht erzeugt, wobei die Testkriterien eine Zeitbereichsbedingung einschließen;
    Identifizieren gemeinsamer Facetten zwischen je zwei Polytopen, wobei die gemeinsame Facette eine Grenze zwischen Äquivalenzklassen darstellt; und
    Erzeugen von Tests durch Auswählen von Werten aus den gemeinsamen Facetten basierend auf den Testkriterien, wobei der erzeugte Test ein Grenzwerttest ist, wenn es sich um ein Polytop in dem normalen Bereich handelt, oder ein Robustheitstest ist, wenn es sich um ein Polytop in dem anormalen Bereich handelt.

7.  Verfahren nach einem der Ansprüche 1 bis 6, wobei das Analysieren des Satzes von Äquivalenzklassen die Anwendung eines formalen verfahrenbasierten Ansatzes einschließt, wobei jede Anforderung als Prädikate dargestellt ist.

8.  Verfahren nach einem der Ansprüche 1 bis 7, das Folgendes einschließt:

    Übersetzen von maschinenlesbaren Anforderungen in Prädikate;
    Erzeugen von Prädikatekonjunktionen für Äquivalenzklassen, gemeinsame Grenzen und nicht abgedeckten Eingaberaum;
    Beanspruchen formaler Verfahrenswerkzeuge bei den Negationen der Prädikatekonjunktionen und Erhalten von Gegenbeispielen;
    Erzeugen von Testeingabesequenzen aus Gegenbeispielen; und

Erzeugen erwarteter Ausgaben durch Anhängen erzeugter Testeingabesequenzen an Anforderungsmodelle als Testziele.

**Revendications**

1. Procédé de génération automatique de cas de test reposant sur des exigences à l'aide d'une analyse de classe d'équivalence,
le procédé comprenant :

   la conversion, par une unité de convertisseur textuel (140), d'exigences de conception textuelle (132) en ensembles de versions lisibles par machine d'exigences de conception (133), une ou plusieurs exigences de conception textuelle comportant un composant de domaine temporel ;
   la partition, par une unité de partition d'exigence (190), des exigences de conception lisibles par machine en un ou plusieurs ensembles d'exigences de conception apparentés, les exigences de conception apparentées étant ces exigences qui ont un impact sur un même ensemble de variables de sortie ;
   le traitement, par une unité de partition de classe d'équivalence (150), des ensembles d'exigences de conception apparentées et de variables d'entrée/sortie en un ensemble de classes d'équivalence (136) ;
   l'analyse, par une unité d'analyseur de classe d'équivalence (160), de l'ensemble de classes d'équivalence :

      l'identification, par une unité d'analyseur de classe de limite (170), de limites des classes d'équivalence, les limites comportant une transition de comportement entre des classes d'équivalence adjacentes et/ou une limite de domaine temporel à l'intérieur d'une classe d'équivalence ;
      l'application d'une analyse de classe d'équivalence à la limite du domaine temporel pour obtenir un ensemble de cas de test de domaine temporel ;
      l'optimisation et la combinaison subséquente, à l'aide d'un résolveur de satisfaction modulo théorie, des cas de test du domaine temporel pour obtenir un second ensemble de cas de test, le second ensemble de cas de test ayant une quantité inférieure à l'ensemble de cas de test avant l'optimisation et la combinaison ; et
      la suppression de clauses redondantes du second ensemble de cas de test.

2. Procédé selon la revendication 1, comportant :

   la partition de l'espace d'entrée pour obtenir des polytopes convexes comportant des polytopes à plage normale et des polytopes à plage anormale ;
   la division des polytopes convexes à l'aide de chaque exigence de conception et d'une condition d'exigence associée en un sous-polytope non couvert par la condition d'exigence associée, et un sous-polytope couvert par la condition d'exigence associée ;
   le tri de chaque polytope dans une classe d'équivalence correspondante ;
   pour les polytopes dans la plage normale, la sélection d'un test de classe d'équivalence (180) en choisissant une valeur à partir du polytope selon un critère de test, sinon la non-génération d'un test de classe d'équivalence, le critère de test comportant une condition de domaine temporel ;
   l'identification de facettes partagées entre chaque deux polytopes, où la facette partagée représente une limite entre des classes d'équivalence ; et
   la génération de tests en sélectionnant des valeurs parmi les facettes partagées en fonction des critères de test, le test généré étant un test de valeur limite s'il s'agit d'un polytope à plage normale ou un test de robustesse s'il s'agit d'un polytope à plage anormale.

3. Procédé selon la revendication 1 ou 2, l'analyse de l'ensemble de classes d'équivalence comportant la partition d'exigences de conception lisibles par machine en identifiant des ensembles d'exigences de conception connectés dans une chaîne de dépendances.

4. Procédé selon l'une quelconque des revendications 1 à 3, comportant la partition de l'espace d'entrée pour obtenir des polytopes convexes comportant des polytopes à plage normale et des polytopes à plage anormale.

5. Procédé selon la revendication 4, comportant :

   la division des polytopes convexes à l'aide de chaque exigence de conception et d'une condition d'exigence associée en un sous-polytope non couvert par la condition d'exigence associée, et un sous-polytope couvert par la condition d'exigence associée ; et

le tri de chaque polytope dans une classe d'équivalence correspondante.

6. Procédé selon la revendication 5 comportant :

pour les polytopes dans la plage normale, la sélection d'un test de classe d'équivalence en choisissant une valeur à partir du polytope selon un critère de test, sinon la non-génération d'un test de classe d'équivalence, le critère de test comportant une condition de domaine temporel ;

l'identification de facettes partagées entre chaque deux polytopes, où la facette partagée représente une limite entre des classes d'équivalence ; et

la génération de tests en sélectionnant des valeurs parmi les facettes partagées en fonction des critères de test, le test généré étant un test de valeur limite s'il s'agit d'un polytope à plage normale ou un test de robustesse s'il s'agit d'un polytope à plage anormale.

7. Procédé selon l'une quelconque des revendications 1 à 6, l'analyse de l'ensemble de classes d'équivalence comportant l'application d'une approche formelle reposant sur des procédés comportant la représentation de chaque exigence sous forme de prédicats.

8. Procédé selon l'une quelconque des revendications 1 à 7, comportant :

la traduction d'exigences lisibles par machine en prédicats ;

la génération de conjonctions de prédicats pour des classes d'équivalence, des limites partagées et un espace d'entrée découvert ;

la demande d'outils de procédés formels sur les négations des conjonctions de prédicats et l'obtention de contre-exemples ;

la génération de séquences d'entrée de test à partir de contre-exemples ; et

la génération de résultats attendus en joignant des séquences d'entrées de test générées en tant qu'objectifs de test à des modèles d'exigences.

FIG. 1

200

Convert textual design requirements to machine-readable form — 205

Analyze the machine-readable requirements and variable information in a data dictionary to produce/identify a set of equivalence classes — 210

215

Identify classes covered by requirements?

Covered

Not covered

220

Is boundary equivalence class in normal range?

Yes

Report uncovered input ranges for requirements completeness verification check — 218

No

230

No test generated

Select a value from the valid equivalence class as equivalence class test — 225

240

Analyze the equivalence classes and identify boundaries and boundary values

250

Generate boundary value test

Yes

245

Is boundary value in normal range?

255

No

Generate robustness test

FIG. 2

```
         300
          ┌───┐
```

| 310 | 320 | 330 | 340 | 350 |

Make normal and abnormal range partitions → For each test objective of the requirement model → Split partitions with requirement intersection and its relative complement → Has more requirements? → Sort and categorize polytopes

360 — Identify facets for every two polytopes

370 — Generate tests based on the facets

**FIG. 3**

400

Translate requirement
conditions to predicates — 410

↓

Generate predicates
conjunctions — 420

↓

Call SAT solvers on the
negations of conjunctions — 430

↓

Generate test input
sequences from
counter examples — 440

↓

Generate test expected
output sequences — 450

# FIG. 4

**REFERENCES CITED IN THE DESCRIPTION**

**Patent documents cited in the description**

- EP 3206129 A1